Europäisches Patentamt

European Patent Office

Office européen des brevets

(11) Publication number: **0 113 696**
A1

# (12) EUROPEAN PATENT APPLICATION

(21) Application number: 84300069.6

(22) Date of filing: 05.01.84

(51) Int. Cl.³: **B 23 K 1/08**

(30) Priority: 05.01.83 GB 8300196
22.11.83 GB 8331124

(43) Date of publication of application:
18.07.84 Bulletin 84/29

(84) Designated Contracting States:
AT BE CH DE FR GB IT LI LU NL SE

(71) Applicant: Rogers, David Norman
Reef Engineering 12 Avenue Works Gallows Corner
Romford Essex(GB)

(71) Applicant: Ferguson, Antony Ernest
21 Sunnycroft Gardens Cranham
Upminster Essex RM14 1HP(GB)

(72) Inventor: Rogers, David Norman
Reef Engineering 12 Avenue Works Gallows Corner
Romford Essex(GB)

(72) Inventor: Ferguson, Antony Ernest
21 Sunnycroft Gardens Cranham
Upminster Essex RM14 1HP(GB)

(74) Representative: Jones, William et al,
Old Bank of England Court Queen Street
Norwich NR2 4SX(GB)

(54) Removal of surface oxide from solder.

(57) A collar (11) is held in a solder bath at or adjacent the solder surface. An open-top pot (14) moves up and down within the collar. The pot initially takes in solder from the bath, is moved up through the collar, and is sufficiently close sliding fit within the collar for the solder carried upward by the pot to shed its surface oxides as that surface clears the top edge of the collar. In alternative embodiments the pot and collar are each circular-cylindrical and each rectangular in plan. In an embodiment the bottom edge of the collar is cut away and bevelled, and the pot descends to a bottom position in which it is still within the collar.

Fig 2a

Fig 2b

EP 0 113 696 A1

- 1 -

## REMOVAL OF SURFACE OXIDE FROM SOLDER

The invention relates to methods and apparatus for removing oxides from a region of the surface of liquid solder held in a bath.

It is well-known that oxides form on the surface of liquid solder in a solder bath. These oxides are colloquially referred to as "dross" and various methods are used to remove thembefore soldering actually takes place. The most usual method is a scraping or wiping device pasing across the solder surface. This method, although effective, is wasteful in that a greater area of solder is cleared of oxide than is required, exposing fresh solder to the air and further oxidation.

In accordance with the present invention, apparatus for removing oxides from a region of the surface of liquid solder, held in a bath, comprises a collar held at or adjacent the solder surface with its axis substantially vertical; an open-top pot whose walls fit closely within the walls of the collar; means positioning the pot initially adjacent the bottom edge of, and coaxial with, the collar such that the pot takes in solder from the bath; means to move the solder-containing pot up to or beyond the top edge of the collar and back again into its initial position; and with the fit between the moving pot and the collar being sufficiently close that the solder carried upward by the pot sheds its surface oxides as it clears the top edge of the collar.

The movable pot need be only as large as is necessary to present an adequate surface area of solder to the workpiece being soldered. Thus the apparatus is considerably more efficient than the known scraping or wiping devices briefly outlined above.

The pot and the collar may be circular, or may be rectangular. It has been found that the necessary close sliding fit between the pot walls and the collar can be larger with a rectangular configuration.

The top and/or bottom edges of the collar may be bevelled in a manner which aids the clearing of oxides from the edges of the pot and collar as the pot operates.

The collar could be held rigidly relative to the solder bath, but preferably it is allowed to "float" up and down and/or from side to side. With this feature the collar can then, to some degree, self-centre about the moving pot.

Preferably the collar is located relative to the bath by readily releasable clamps. The collar can then easily be removed for cleaning.

Preferably also the necessary gap between the walls of the pot and the inside wall of the collar lies within the range 0.005 inches to 0.025 inches. It might advantageously lie between 0.010 inches and 0.020 inches since this has been found to give acceptable results.

This gap is advantageously kept substantially constant (ie. the walls of the pot and the collar are substantially parallel with one another) throughout the time the pot and collar overlap. There is then the minimum tendency for any oxides to wedge in the gap as the pot ascends or descends.

The accompanying drawings show, by way of example only, two apparatus each embodying the invention. They will now be described.

In the drawings:

Figures 1a and 2a show a first apparats in side elevation and in different stages of operation;

Figure 1b shows the apparatus in plan;

Figure 2b shows part of the apparatus in operation;

Figure 3a shows the main parts of the second apparatus in side elevation; and

Figure 3b shows the apparatus of Figure 3a "exploded".

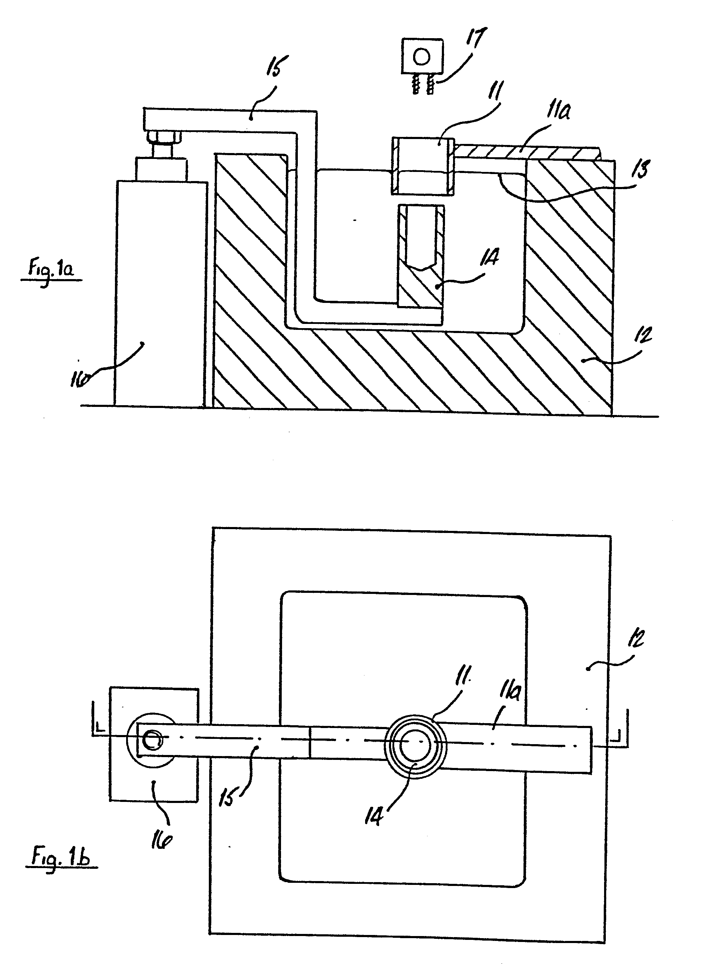

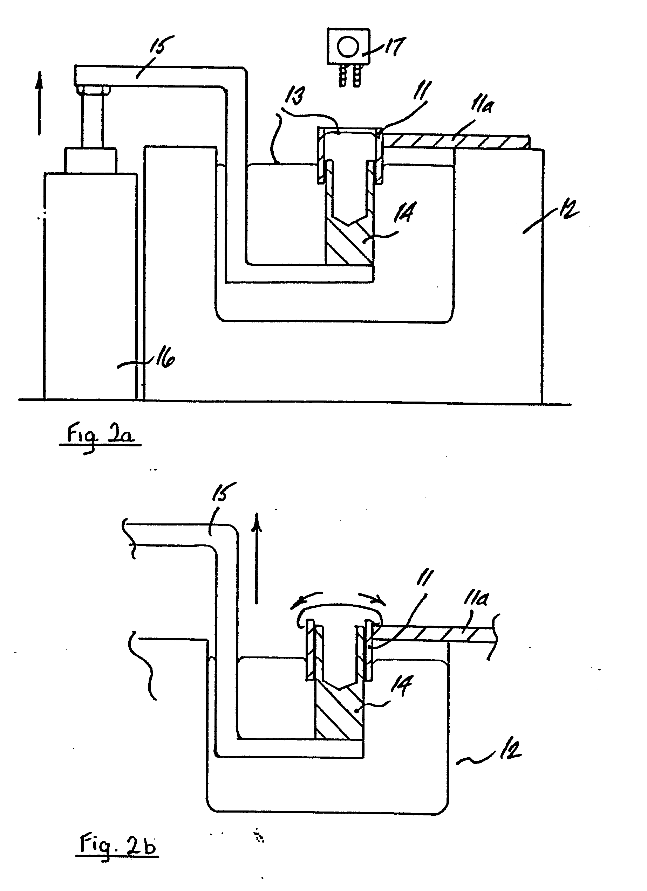

Referring first to Figures 1 and Figures 2, a circular collar referenced 11 is held at one end of an elongate arm 11a in a bath 12 of hot molten solder. The arm 11a is fixed rigidly to the top edge of one side of the bath 12 and holds the collar 11 partly submerged in the solder surface 13. The bath 12 itself need not be described in detail.

A small open-topped solder-containing pot 14 is circular cylindrical and is sized to be a close sliding free moving fit in the collar 12. An arm 15 carries the pot 14 at one end, and its other end is fixed to the moving rod of a hydraulic or pneumatic double-acting ram 16.

As shown, when the ram 16 is in its initial, retracted, position then the arm 15 positions the pot 14 with its top edge below the bottom edge of the collar 11 (Figure 1a) and with the pot and collar essentially coaxial, the common axis being substantially vertical.

In use, oxides form on the surface 13 of the solder within the bath 12. These oxides are present on the solder surface within the collar 11. The pot 14 is initially held in the position illustrated in Figure 1a below the bottom edge of the collar 11. The ram 16 is then extended to move the pot, from that initial position, vertically up into the collar 11 as illustrated in Figure 2a. The pot carries enough solder with it to satisfy the soldering requirements of the workpiece 17 shown in Figures 1a and 2a.

Further upward movement of the pot 14, to a position illustrated in Figure 2b where the lifted solder surface clears the top edge of the collar 11, causes the surface oxides on the solder contained within the pot to "roll" as indicated by the curved arrows in Figure 2b. This is thought to be caused primarily be surface tension acting between the close sliding co-operating pot and collar walls. If the gap "g" between the pot and the collar is too large, the effect is not properly produced.

Conversely if the gap "g" is too small then a smooth free-moving action of the pot inside the collar cannot be obtained; and again the required effect is not properly produced.

The solder which is "rolled" off the top of the pot in this way returns automatically to the parent solder bath, carrying its surface oxides with it. The solder remaining within the pot presents an unoxidised surface to the workpiece 17. When the ram 16 is subsequently retracted to bring the pot 14 back to its Figure 1a position, the pot is again below the lower edge of the collar 11 allowing fresh solder to occupy the void created by its downward movement.

The gap "g" is essentially constant from the top edge to the bottom edge of the collar 11 throughout the time the collar and the pot 14 overlap. In other words, the collar and pot are coaxial and parallel.

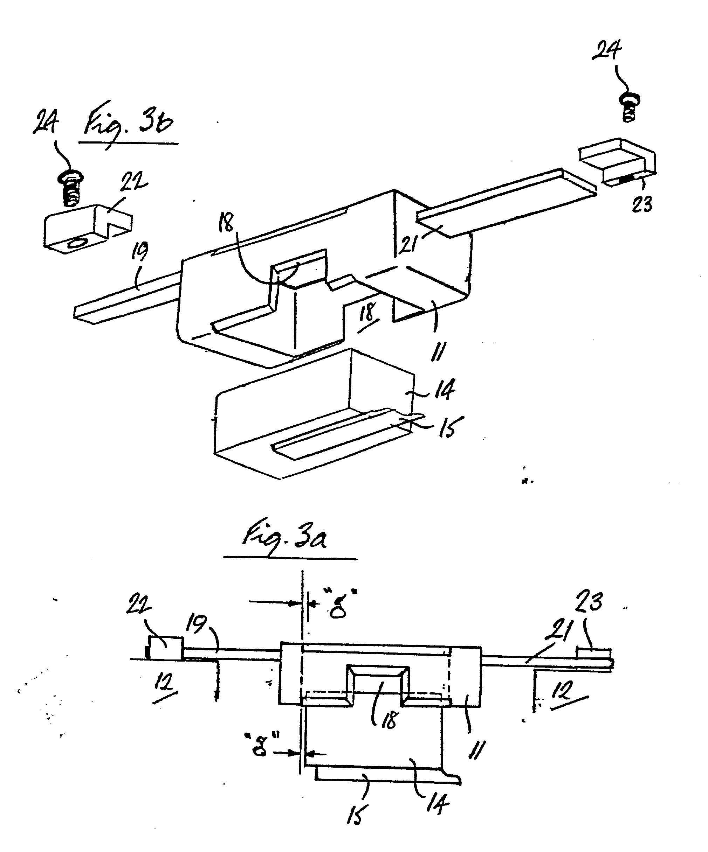

In Figures 3a and 3b the collar 11 and pot 14 are both rectangular rather than circular-cylindrical, and the opposite bottom edges of the collar 11 are recessed as indicated at 18. They are also bevelled, as is the top edge of the collar, to enhance the "cutting away" of oxides from the sides of the pot 14 as the pot ascends and descends.

In Figures 3a and 3b, the collar 11 is located in position in the parent bath 12 by arms 19, 21 which project rigidly from each opposite end of the collar 11 and enter L-shaped clamps 22, 23 fixed releasably by screws 24 to the top edges of the bath sidewalls. As Figure 3b shows, the clamps 22, 23 locate the arms 19, 21 but allow them to "float" to a very limited extent up and down. This up-and-down gap between the arm-ends and clamps may be no more than 0.010 inches and is preferably not less than 0.005 inches.

The clamps 22, 23 are open-sided and allow the collar 11 to move sideways. However, because the bottom edge of the collar 11 is recessed, the pot 14 does not come out of the bottom of the collar even when the pot reaches its lowest initial position. The pot can take in solder, in that position, provided its top edge moves below the top of the bevelled recess 18. The collar 11 thus "self-centres" about the pot and it is not necessary to restrain its sideways or endways movement.

As illustrated, the screws 24 are turned fully home and hold the clamps rigidly in their illustrated positions. The clamps are readily released by slackening the screws.

CLAIMS:

1.    Apparatus for removing oxides from a region of the surface of liquid solder held in a bath, the apparatus comprising a collar held at or adjacent the solder surface with its axis substantially vertical; an open-top pot whose walls fit closely within the walls of the collar; means positioning the pot initially adjacent the bottom edge of, and coaxial with, the collar such that the pot takes in solder from the bath; means to move the solder-containing pot up to or beyond the top edge of the collar and back again into its initial position; and with the fit between the moving pot and the collar being sufficiently close that the solder carried upward by the pot sheds its surface oxides as it clear the top edge of the collar.

2.    Apparatus according to Claim 1 and in which the pot and the collar are rectangular in plan.

3.    Apparatus acording to Claim 1 or Claim 2 and in which the collar is recessed about its bottom edge.

4.    Apparatus according to any preceding Claim and in which the bottom edge of the collar is bevelled in a manner which aids the efficient clearing of oxides from the edges of the pot and collar.

5.    Apparatus according to any preceding Claim in which the collar is allowed a limited "float" up and down and/or from side-to-side.

6.    Apparatus according to any preceding Claim and in which the collar is located relative to the bath by releasable clamps.

7.    Apparatus according to any preceding Claim in which the necessary gap between the walls of the pot and the inside wall of the collar lies within the range 0.005 inches to 0. 025 inches.

8.    Apparatus according to any preceding Claim in which the walls of the pot and the collar are substantially parallel with one another throughout the time the pot and collar overlap.

9.    Apparatus substantially as described with reference to and as illustrated in Figures 1 and Figures 2 of the accompanying drawings.

10.    Apparatus according to Claim 9 when modified substantially as described with reference to and as illustrated in Figures 3 of the accompanying drawings.

Fig. 1a

Fig. 1b

0113696

1/3

Fig. 2a

Fig. 2b

Fig. 3b

Fig. 3a

**European Patent Office**

**EUROPEAN SEARCH REPORT**

| | DOCUMENTS CONSIDERED TO BE RELEVANT | | EP 84300069.6 |

| Category | Citation of document with indication, where appropriate, of relevant passages | Relevant to claim | CLASSIFICATION OF THE APPLICATION (Int. Cl. ³) |
|---|---|---|---|
| A | DE - A1 - 2 740 139 (METEOR AG) <br> + Fig. 1, 2 + <br> ---- | | B 23 K 1/08 |

**TECHNICAL FIELDS SEARCHED (Int. Cl. ³)**

B 23 K 1/00
B 23 K 3/00

The present search report has been drawn up for all claims

| Place of search | Date of completion of the search | Examiner |
|---|---|---|
| VIENNA | 13-03-1984 | BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82